(19)

Europäisches Patentamt
European Patent Office
Office européen des brevets

(11) **EP 2 373 871 B1**

(12) **EUROPEAN PATENT SPECIFICATION**

(45) Date of publication and mention of the grant of the patent:
**10.07.2019 Bulletin 2019/28**

(21) Application number: **09837394.7**

(22) Date of filing: **04.11.2009**

(51) Int Cl.:
*E21B 44/00* (2006.01)    *E21B 47/00* (2012.01)

(86) International application number:
**PCT/IB2009/007477**

(87) International publication number:
**WO 2010/079379 (15.07.2010 Gazette 2010/28)**

(54) **DRILLSTRING DYNAMICS**

BOHRSTRANGDYNAMIK

DYNAMIQUE D'UN TRAIN DE TIGES DE FORAGE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.01.2009 GB 0900229**

(43) Date of publication of application:
**12.10.2011 Bulletin 2011/41**

(73) Proprietors:
• **Schlumberger Technology B.V.**
**2514 JG The Hague (NL)**
Designated Contracting States:
**BG CZ DE DK GR HU IE IT LT NO PL RO SI SK TR**
• **Schlumberger Holdings Limited (SHL)**
**Tortola (VG)**
Designated Contracting States:
**GB NL**
• **Services Pétroliers Schlumberger**
**75007 Paris (FR)**
Designated Contracting States:
**FR**
• **Prad Research And Development Limited**
**Tortola (VG)**
Designated Contracting States:
**AT BE CH CY EE ES FI HR IS LI LU LV MC MK MT PT SE SM**

(72) Inventor: **JEFFRYES, Benjamin**
**Cambridgeshire CB24 9LQ (GB)**

(74) Representative: **Schlumberger Intellectual Property Department**
**Parkstraat 83**
**2514 JG Den Haag (NL)**

(56) References cited:
**US-A- 4 760 735       US-A- 4 760 735**
**US-B2- 6 732 052     US-B2- 6 732 052**
**US-B2- 7 085 696     US-B2- 7 085 696**

• **CANUDAS-DE-WIT C ET AL: "D-OSKIL: A New Mechanism for Controlling Stick-Slip Oscillations in Oil Well Drillstrings", IEEE TRANSACTIONS ON CONTROL SYSTEMS TECHNOLOGY, IEEE SERVICE CENTER, NEW YORK, NY, US, vol. 16, no. 6, 1 November 2008 (2008-11-01), pages 1177-1191, XP011226485, ISSN: 1063-6536, DOI: 10.1109/TCST.2008.917873**
• **NAVARRO-LOPEZ AND R SUAREZ E M: "Modelling and Analysis of Stick-slip Behaviour in a Drillstring under Dry Friction", CONGRESO ANUAL DE LA AMCA 2004,, 1 January 2004 (2004-01-01), pages 330-333, XP008149396,**
• **E.M. NAVARRO-LOPEZ ET AL CONGRESO ANUAL DE LA AMCA 2004 2004, pages 330 - 333, XP008149396**

**Description**

<u>Field</u>

Embodiments of the present invention relate to a method of determining, modeling, managing and/or correcting movement dynamics of a drillstring, and particularly a method which uses a friction coefficient for the sliding contact between a drillstring and the sidewall of a borehole.

<u>Background</u>

During the drilling of subterranean boreholes, high levels of rotational oscillation of the drillstring may occur; the drillstring going through cycles of rotational acceleration and deceleration. In some situations this can lead to "stick-slip" occurring, in which the bit or portions of the drillstring are at rest or even turn backwards.

These oscillations can be influenced by the choice of drill bit and the force and rotation speed applied to the drill bit. The generation of these oscillations has been attributed to a rotational force acting on the bit that reduces with increased rotation speed.

However, "stick-slip" oscillations have also been observed in drillstrings when rotating off-bottom, for example while running into hole. This is generally a feature of wells in which a substantial portion of the borehole is either horizontal or near-horizontal (also known as high-angle wells). It has been empirically determined that the oscillations become more severe as the hole lengthens and as the torque required to rotate the drillstring increases.

While observationally it may be seen that "friction" of some kind is a contributory agent in generating rotational oscillations, it has not previously been determined what properties of the frictional interaction are necessary for the generation of rotational oscillations, or how they may be interpreted, measured or estimated.

Nonetheless, it is often necessary to estimate and measure frictional parameters for use in the planning, simulation and monitoring of wells, especially those that deviate substantially from the vertical.

In modelling the torque and drag behaviour of drillstrings, it is conventional to use a Coulomb friction model for the tangential sliding contact between a drillstring and a borehole, i.e. the sliding contact at the sidewall of the borehole, not at the bit face. Such a model uses two friction coefficients (i.e. the model is based on the constant of proportionality between the frictional force and the normal side force): a dynamic friction coefficient for when the drillstring is moving relative to the borehole, and a static friction coefficient for when the drillstring is at rest. The dynamic friction coefficient is constant for changes in the relative velocity between the drillstring and the borehole, while the static friction coefficient is normally higher than the dynamic friction coefficient since the force (or torque) required to set a drillstring into motion is generally higher than that required to keep it in motion. According to this model, the friction coefficient changes instantaneously between the shift from static to the dynamic regime.

In Coulomb friction models for torque and drag, different friction coefficients may be used for tangential motion in different directions, for instance in SPE paper 19958 (M.S. Quigley et al., A Full-Scale Wellbore Friction Simulator, presented at IADC/SPE Drilling Conference, Houston, Texas, 27 February to 2 March, 1990), significantly different dynamic Coulomb friction coefficients were experimentally measured for axial and rotational motion. In this paper, the variations with velocity direction of dynamic (not static) coefficients were measured.

During the drilling of boreholes with rotation induced at least in part by the rotation of the top of the drillstring, the tangential sliding contact velocity has components both along the axis of the borehole and normal to the axis (in the direction of rotation), however the component in the direction of rotation is normally greatly in excess of the component along the axis of the borehole - and thus, the detail of how the friction coefficient may vary with direction does not play a significant role in the determination of the drillstring dynamics. If the drillstring is not being rotated from the surface, but instead the drillbit is turned by a positive displacement motor close to the bit, or if the drillstring rotation is slow and the axial velocity is large (for instance, during slow reaming in or out of hole), then axial friction may be dominant or significant.

In the planning of wells, the torque necessary to turn the drillstring can be estimated for different values of the friction coefficient, and parameters such as the drillstring elements and the trajectory of the borehole can be adjusted so that for a range of reasonable values of the friction coefficient, the torque necessary to turn the drillstring at surface and drill ahead are within an acceptable range (e.g. below the maximum limit of the drill rig and also below the maximum torque allowable on the tubulars, which form the drillstring). Commonly, different values of friction coefficient are used for portions of the well that are lined with steel casing and the open hole (rock section) portions. It may also be taken into consideration that the friction coefficient in some parts of the well reduces over time due to polishing. For wells drilled in an area where there are existing wells of a similar type, likely values of the friction coefficient may be obtained by comparing observed torques in those wells with those predicted by different friction coefficients, and eliminating those values which are contradicted by observation.

A similar exercise is normally conducted for estimation of drag when the drillstring motion is axial (for instance pulling out of hole or running into hole, or to assess the forces on the drillstring when drilling without axial rotation from surface). As for torque, this modelling exercise can be conducted with a range of friction coefficients, and the drag values obtained with friction coefficients within the normal range can be used to assess whether the drilling operation can be satisfactorily conducted with the equipment available.

During the drilling of wells it is usual to monitor the torque as drilling proceeds, compare it to that expected with different values of the friction coefficient, and to use this to make updated predictions as to the torque required at latter stages of drilling the well. If lubricants are being used to reduce the friction coefficient, then the monitoring of torque and the comparison with the expected torque from different friction coefficients allows the effects of the lubricant to be assessed and the quantity of lubricant in the drilling fluid to be adjusted.

The document by CANUDAS-DE-WIT C ET AL, "D-OSKIL: A New Mechanism for Controlling Stick-Slip Oscillations in Oil Well Drillstrings", IEEE TRANSACTIONS ON CONTROL SYSTEMS TECHNOLOGY, IEEE SERVICE CENTER, NEW YORK, NY, US, (2008-11-01), vol. 16, no. 6, 1 November 2008 (2008-11-01), pages 1177 -1191, XP011226485 ISSN 1063-6536, DOI:10.1109/TCST.2008.917873, describes the use of the weight on the bit (WoB) force as an additional control variable to extinguish limit cycles due to interaction between the drill bit and the rock during drilling operations in vertical well.

## Summary

The present invention was at least partly conceived in view of simulation results which demonstrate that the observed phenomenology of off-bottom rotational oscillations in high-angle wells cannot be reproduced using a Coulomb friction model. For example, once motion of the entire drillstring has been initiated, and with continuous rotation at the top, the simulations predict that the oscillations of the drillstring should reduce until steady rotational motion is obtained. The prediction is the same whether the static friction coefficient is equal to, greater than, or less than the dynamic friction coefficient. However, in practice, steady rotational motion is not necessarily achieved.

In general terms, the present invention applies a friction coefficient for the sliding contact between a drillstring and the sidewall of a borehole, which friction coefficient is a varying function of non-zero sliding velocities.

Thus a first aspect of the present invention provides a method of determining movement dynamics of a drillstring in an angled or deviated borehole, the method including the steps of:

   (a) calculating or measuring a friction coefficient for the sliding contact between a drillstring and the sidewall of the angled or deviated borehole, wherein a frictional force is present between the drillstring and the angled or deviated borehole, wherein the total frictional force comprises a component approximately proportional to a normal side force between the drillstring and the angled or deviated borehole,, and wherein the friction coefficient is a varying function of non-zero sliding velocities; and

   (b) predicting movement dynamics of a drillstring (such as the rotational velocity of the drillstring) using a model of drillstring behaviour which includes the measured friction coefficient as a parameter.

Advantageously, by employing a friction coefficient which has such a functional form, the predicted movement dynamics can reproduce those observed in the field.

The friction coefficient may be calculated in step (a), the calculation being performed by fitting a model of drillstring behaviour to in-service measurements obtained from the drillstring while the drillstring is operating in the borehole, the model having said friction coefficient as a directly or indirectly adjustable variable. The friction coefficient calculated in this manner is likely to provide accurate predictions for the drillstring. The method may include the initial step of operating the drillstring to obtain the in-service measurements.

However, alternatively, the friction coefficient may be measured in step (a), the measurement being obtained from a test rig which simulates sliding contact between the drillstring and the sidewall of the borehole. This approach may be adopted, for example, where in-service measurements are not available.

Step (b) may be performed repeatedly for different drillstring operating conditions. For example, the different operating conditions may be obtained by varying one or more modelling parameters selected from the group consisting of drillstring advance rate, drillstring length, drillstring trajectory, drillstring rotational velocity, mean cross-sectional area of the metal in the drillstring pipe, and mean radius squared of the metal in the drillstring pipe. In this way, an optimum or improved set of parameters can be identified which can be used in drilling a borehole.

Indeed, a second aspect of the present invention provides a method of operating a drilling rig which controls a drillstring in a borehole, the method including: performing the method of the first aspect to identify an operating condition for the drillstring predicted to provide stable movement dynamics; and drilling the borehole under the identified operating condition with the drillstring.

Further, a third aspect of the invention provides the method of the first aspect comprising operating a drilling rig which controls a drillstring in a borehole, the method including the steps of:

(a) predicting movement dynamics of the drillstring (such as, the rotational velocity of the drillstring) for different drillstring operating conditions, the predictions using a model of drillstring behaviour which includes the calculated or measured friction coefficient for the sliding contact between the drillstring and the sidewall of the borehole;, t

(b) selecting an operating condition predicted to provide stable movement dynamics; and

(c) drilling the borehole with the drillstring under the selected operating condition.

In step (a) the different operating conditions may be obtained by varying one or more modelling parameters selected from the group consisting of drillstring advance rate, drillstring length, drillstring trajectory, drillstring rotational velocity, mean cross-sectional area of the metal in the drillstring pipe, mean radius squared of the metal in the drillstring pipe and the velocity dependency of the friction coefficient.

Brief Description of the Drawings

Embodiments of the invention will now be described by way of example with reference to the accompanying drawings in which:

Figure 1 shows a plot of friction coefficient against revolutions per minute of a drillstring and illustrates a typical Coulomb friction model;

Figure 2 shows a plot of friction coefficient against revolutions per minute of a drillstring and illustrates a Stribeck-type friction model;

Figures 3(a) to (f) show results for a simulation of a 6000 m long drillstring, using a Coulomb friction model;

Figures 4(a) to (f) show results for a simulation of a 6000 m long drillstring, using a Stribeck-type friction model;

Figure 5 shows a possible laboratory apparatus for making friction coefficient measurements;

Figure 6 is a flow chart for a method of determining movement dynamics of a drillstring; and

Figure 7 is a flow chart for a method of operating a drilling rig which controls a drillstring in a borehole.

Detailed Description

The ensuing description provides exemplary embodiment(s) only, and is not intended to limit the scope, applicability or configuration of the invention. Rather, the ensuing description of the exemplary embodiment(s) will provide those skilled in the art with an enabling description for implementing a preferred exemplary embodiment of the invention. It being understood that various changes may be made in the function and arrangement of elements without departing from the spirit and scope of the invention as set forth in the appended claims.
Specific details are given in the following description to provide a thorough understanding of the embodiments. However, it will be understood by one of ordinary skill in the art that the embodiments maybe practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.
Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.
Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

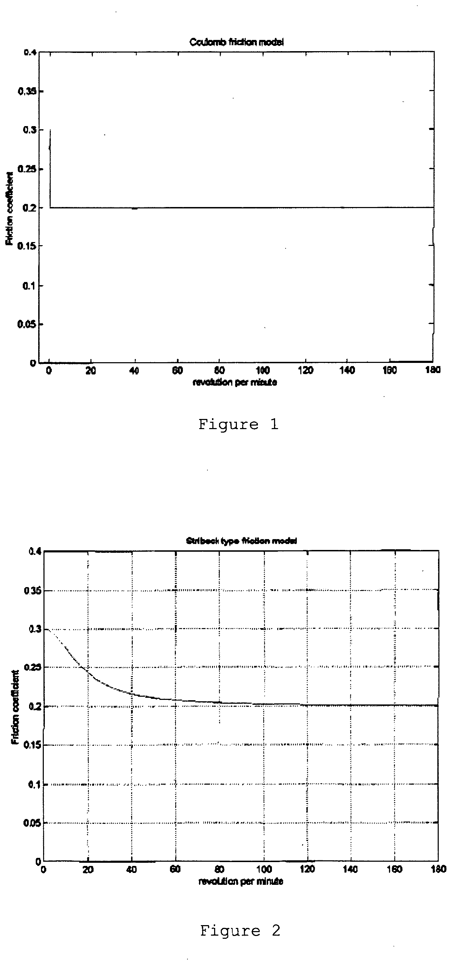

Figure 1 shows a plot of friction coefficient against revolutions per minute of a drillstring and illustrates a typical Coulomb friction model, having a dynamic friction coefficient of 0.2 and a static friction coefficient of 0.3, and used conventionally to estimate and measure frictional parameters for use in the planning, simulation and monitoring of wells.

R. Stribeck (in Die Wesentlichen Eigenschaften der Gleit- und Rollenlage, Z. Verein. Deut. Ing, volume 46, pp1341-1348, 1902) observed that in oil-lubricated journal bearings the frictional force depends on the velocity, with the friction coefficient declining with velocity for low non-zero velocities. B.J. Briscoe et al. (in Lubrication of water based clay suspensions, in "Tribology Research: From Model Experiment to Industrial Problem", G. Dalmaz et al. (ed.), Elsevier Science, pp 331-340, 2001) measured similar behaviour for steel-on-steel contact lubricated by a bentonite based drilling fluid. At higher velocities Stribeck observed the friction increasing, so in addition to a function which declines at low velocities, a term proportional to velocity is normally added.

To define a Stribeck-type friction law, as well as static and dynamic values of the friction coefficient, the functional relationship between velocity (and any other parameters) and the friction coefficient is required. For example, one form that may be used is inverse quadratic:

$$\mu(v) = \mu_{dynamic} + \frac{\mu_{static} - \mu_{dynamic}}{1 + \sigma v^2} + b|v| \qquad (1)$$

where v is velocity, $\mu(v)$ is the velocity dependent friction coefficient, $\mu_{dynamic}$ is the dynamic friction coefficient, $\mu_{static}$ is the static friction coefficient, b is the coefficient of the term proportional to velocity, and $\sigma$ is a velocity dependent parameter that determines the slope of the continuous transition from the value of the static friction coefficient to the value of the dynamic friction coefficient as v increases. Another form that may be used is exponential:

$$\mu(v) = \mu_{dynamic} + \left(\mu_{static} - \mu_{dynamic}\right) \exp\left(-\log(2)\beta|v|\right) + b|v| \qquad (2)$$

where $\beta$ is a further velocity dependent parameter.

Figure 2 shows a plot of friction coefficient for the sliding contact between a drillstring and a sidewall of a borehole against revolutions per minute of the drillstring and illustrates a Stribeck-type friction model in which the friction coefficient is a varying function of non-zero sliding velocities. The model has a dynamic friction coefficient $\mu_{dynamic}$ of 0.2 and a static friction $\mu_{static}$ coefficient of 0.3.

Parameters in the Stribeck-type models can vary according to other factors. For instance, the velocity parameter can vary with normal contact stress according to a Herzian contact model, and the static friction coefficient can increase with the time that the drillstring and borehole surfaces have spent at rest with respect to one another.

A model simulating a drillstring in a borehole was developed. The simulation solves coupled sets of partial differential equations modelling the propagation of axial and rotational waves, each of the form:

$$m \frac{\partial v}{\partial t} = \frac{\partial F}{\partial x}$$
$$\lambda \frac{\partial F}{\partial t} = \frac{\partial v}{\partial x} \qquad (3)$$

where x is the distance along the drillstring, t is the time, F is axial stress for the axial waves and the rotational stress for rotational waves, m is the mass per unit length for axial waves and the moment of inertial per unit length for rotational waves, v the axial velocity for axial waves and the angular velocity for rotational waves, and $\lambda$ is the axial compliance per unit length for axial waves and the rotational compliance per unit length for rotational waves.

External forces act on the system at the tool joints, and at other locations, most notably at the bit, where a bit model of the form:

$$F = -Sd$$
$$d = \frac{v}{\omega} \tag{4}$$
$$T = -Ed^c - Fv + fF$$

is used (T is the torque, F the axial force, d the depth of cut per revolution, v the axial velocity, ω the angular velocity, and c, f, S and E are constants).

If the drillstring is being modelled when off-bottom, the boundary condition at the bit is taken as being "free" (i.e. zero torque, and zero axial force).

At each tool joint, there are forces modelled from fluid drag, and most notably from friction.

The total frictional force contains a component roughly proportional to the normal side force (calculated as the sum of the gravitational force and a geometric force comprising the local tension multiplied by the curvature), and is also a function of the total sliding velocity (the vector sum of the velocities due to rotation and axial motion). There is not strict proportionality as the ratio of the total frictional force to the normal side force, (i.e. the friction coefficient) may be a function of the estimated contact stress, which is itself a function of the normal side force. The friction coefficient is calculated according to the desired model (*e.g.* Coulomb or Stribeck-type or other). This allows the effect of these models, and other model parameters, on the dynamics of the system to be established.

In the simulation, the frictional force is not allowed to reverse the direction of motion of a tool joint. Thus if the addition of a calculated frictional force becomes sufficient to change the calculated direction of motion, that force is reduced so as to be just enough to prevent any motion.

An additional fluid drag component may be added that is proportional to the difference in velocity between the drillstring motion and the fluid velocity (and does not depend on the normal side force).

The sliding velocity is a vector quantity, and if the friction coefficient is assumed not to depend on the direction of the velocity, only its magnitude, then the frictional force will also act in the same direction, so as to oppose the motion. More generally, different friction coefficients can be used in the axial and rotational directions, and the various parameters required for the calculation of the friction coefficients may differ for the axial and rotational directions. The sliding velocity is then decomposed into components in these two directions, and the frictional forces calculated separately for the two directions. In this case, the direction of the friction force will not in general oppose the direction of motion.

However, for the modelling of off-bottom drillstring rotation, when running into or pulling out of hole, the relatively small axial drillstring velocity compared to the rotational contact velocity means that the exact form of the variation in friction coefficient with direction has little effect on the qualitative or quantitative simulation results.

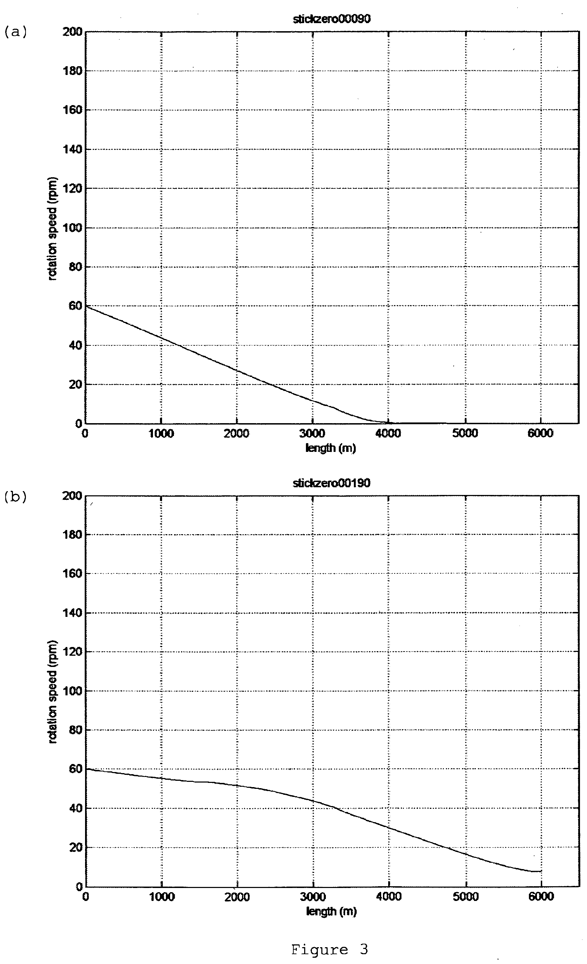

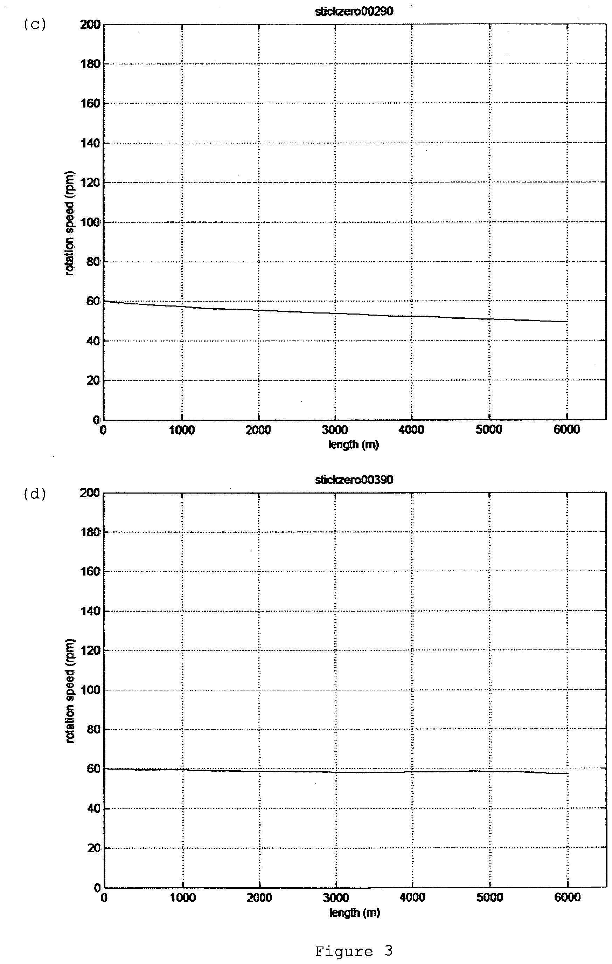

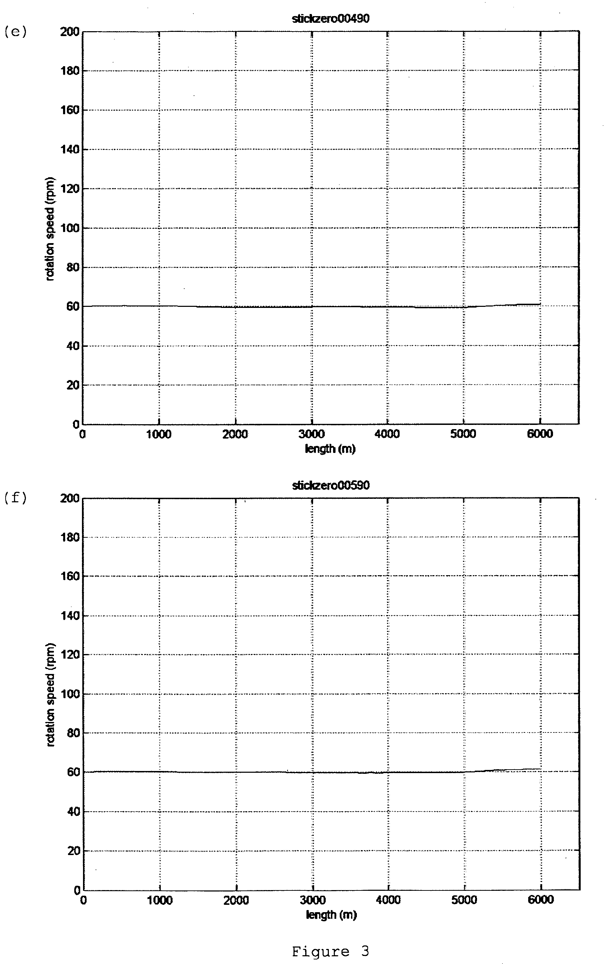

Figures 3(a) to (f) show results for a simulation on a 6000 m long drillstring, in which a Coulomb friction model is applied. The borehole is largely horizontal and at time zero the drillstring is at rest and off-bottom. A rotation speed of 60 rpm is then applied at the surface and that surface rotation is maintained for all times after time zero. Figures 3(a) to (f) show plots derived from the model of rotation speed against position along the drillstring at times of respectively 4.5, 9.5, 14.5, 19.5, 24.5 and 29.5 seconds.

The simulation predicts that by about 20 seconds, the off-bottom bit is rotating at about 60 rpm without having undergone any stick-slip oscillations. Effectively, the rotation is stable and uniform along the length of the drillstring.

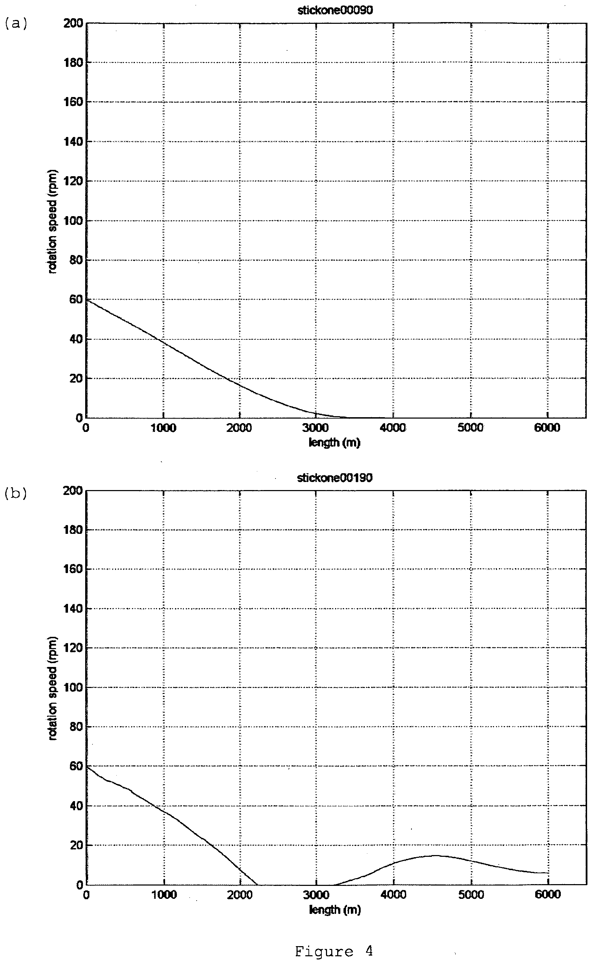

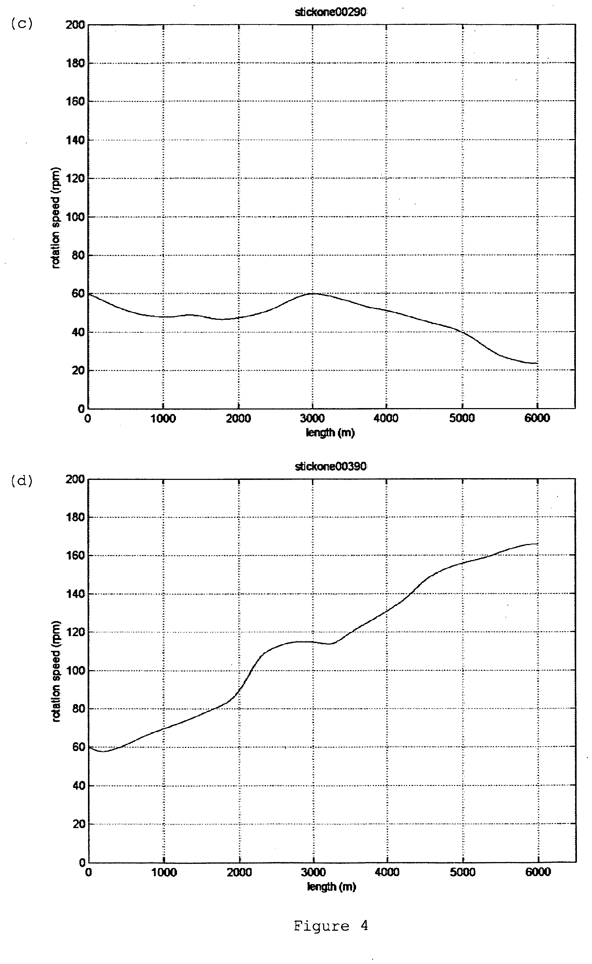

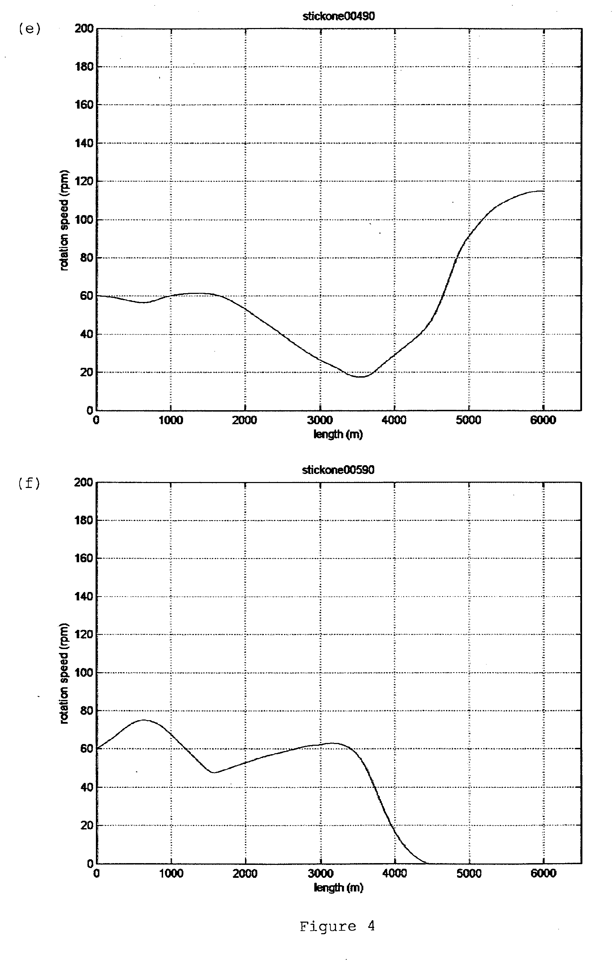

Next, Figures 4(a) to (f) show results for a corresponding simulation, in which the only change is that a Stribeck-type friction model is applied instead of the Coulomb friction model. Again, Figures 4(a) to (f) show plots derived from the model of rotation speed against position along the drillstring at times of respectively 4.5, 9.5, 14.5, 19.5, 24.5 and 29.5 seconds.

The simulation based on the Stribeck-type friction model does not predict the achievement of stable and uniform rotation along the length of the drillstring. Rather, strong stick-slip oscillations are produced, with the off-bottom bit rotating at one point at over 160 rpm before dropping back down to zero rpm.

Simulations of purely axial motion of horizontal drillstrings show qualitatively similar results. Using a Coulomb friction model and pulling or pushing the drillstring from surface, after a time the drillstring moves in a smooth manner at constant speed. Employing a Stribeck friction model, the drillstring motion is jerky and erratic, with portions of the drillstring in motion when other portions are stationary.

Thus employing either an inverse quadratic or exponential Stribeck-type friction model in such simulations, or more generally employing a friction coefficient which is a varying function of non-zero sliding velocities, can lead to predicted behaviour which is in agreement with field observations. In contrast, the Coulomb friction model provides predictions which are not in agreement. For example, in simulations of initiation of rotation in a drillstring in a high-angle well, the Coulomb friction model cannot reproduce off-bottom rotational oscillations of the type observed in the field.

Further, simulations based on the Stribeck-type friction model show that the occurrence of rotational oscillations depends critically on the start-up rotation speed, the oscillations being worse for longer high-angle drillstring sections, and the oscillations depending on the properties of the drillpipe in the drillstring, most notably the moment of inertia and rotational stiffness, and the ratio of the mass per unit length to the rotational stiffness. For different drillpipe of the same material, key parameters are the mean cross-sectional area of the metal in the pipe, and the mean radius squared of the metal in the pipe.

An interesting feature of the simulations is that only a small change in the simulation parameters can completely alter the predicted behaviour of the drillstring. For example, if the drillstring is brought up to a rotation speed at which no stable rotation can be maintained, only a small increase in rotation speed can move the drillstring into a regime in which the oscillations quickly decay down to steady rotation.

This behaviour can be exploited to calibrate the velocity dependent parameter (i.e. $\sigma$ or $\beta$) in the expression for the friction coefficient. For example, if it is observed in the real well that at 150 rpm there are uncontrollable oscillations and at 165 rpm stable rotation is achieved, then the velocity dependent parameter may be chosen to lie within the narrow range which reproduces this behaviour for the drillstring in question. Having established the velocity parameter, predictions of behaviour in a longer hole, or with a different drillstring may be made.

Other observations may be used in a similar manner. For example, the length of drillstring at which stick-slip oscillations begin can also allow the velocity dependent parameter to be calibrated.

Thus the present invention provides for the first time an approach in which a drillstring/borehole friction coefficient with different values for different non-zero rotational velocities is determined, and then that friction coefficient is subsequently used for forward modelling of the drillstring. The approach can be particularly effective when the determination is based on existing drilling data for that drillstring. Previous determination of Stribeck-type friction coefficients has relied on laboratory testing equipment, as for example in Briscoe *et al.* (ibid.).

Nonetheless, laboratory measurements can also be used to characterise Stribeck-type friction models, and are particularly useful when real drillstring data are not available, or when confirmation of or extrapolations from measurements based on such data are required. For example, measurements can be made of the friction coefficient between two objects representative of the tubulars in the drillstring and the borehole wall respectively, the objects being immersed in a fluid representative of the drilling fluid used in the well. Changes to the coefficient can then be measured as a function of the relative contact velocity between the objects and any other parameters that may be of interest, such as normal force, relative curvatures of the contacting surfaces of the objects, solids content in the fluid, time in contact, fractional content of lubricants, temperature and pressure.

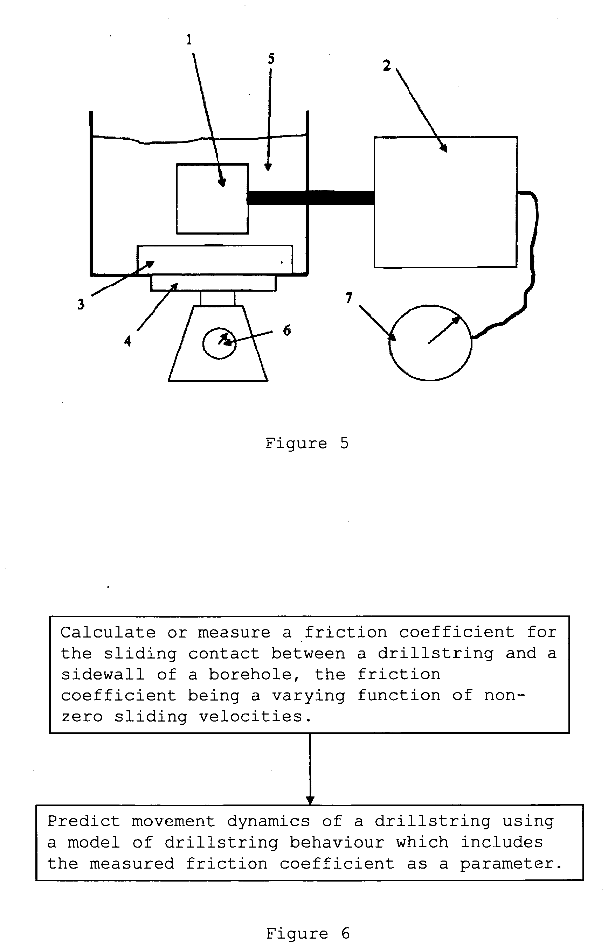

A possible laboratory apparatus for making velocity dependent friction coefficient measurements is shown in Figure 5. A steel bobbin 1 is rotated at a fixed speed by a motor 2. Pressing up on the bobbin is a material sample 3, the pressing force being supplied by a hydraulic piston 4. The bobbin and material sample are immersed in a fluid bath 5. The force on the sample may be calculated from the reading of a hydraulic pressure gauge 6, and the torque required to turn the bobbin can be determined indirectly from current meter 7 for the motor.

The experimentally determined values of the friction coefficient versus contact pressure and velocity can be used directly in simulations of the rotational behaviour of the drillstring, prior to the drilling of the borehole. Additionally or alternatively, a theoretical Stribeck-type friction coefficient curve (or a range of curves) can be fitted to the laboratory measurements and used in the simulations.

A further use of experimentally determined values of the friction coefficient is to establish initial reasonable ranges for the parameters of a Stribeck-type friction model. The parameters can then be varied within these ranges in simulations of the rotational dynamics of a drillstring to match with the observed dynamics of the drillstring while rotating inside the borehole.

Different lubricants and other additives can also be tested and their effects observed on the variation of the experimentally determined friction coefficient with velocity and other parameters. Again, the friction coefficients can be tested in modelling simulations of the rotational dynamics of a drillstring. Based on the simulations, the additives can be chosen that provide the most stable rotational behaviour, or provide at least adequate rotational behaviour while also providing other desirable characteristics, such as reducing the dynamic friction coefficient when rotating at the speed required to drill-ahead.

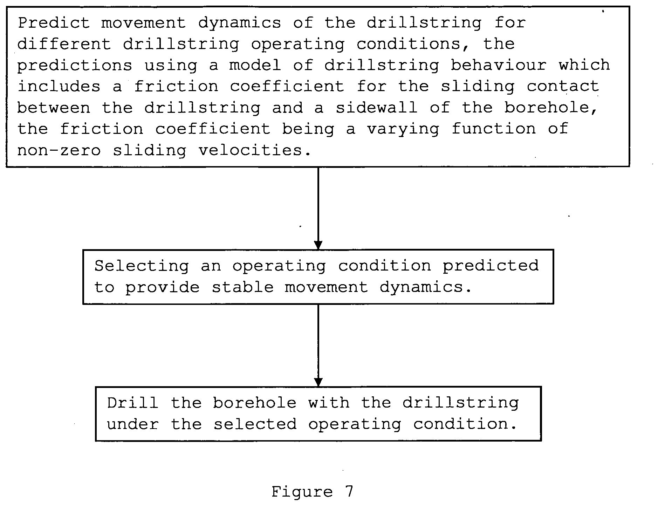

Figures 6 and 7 are flow charts which show schematically methods according to the present invention. Figure 6 is a flow chart for a method of determining movement dynamics of a drillstring, and Figure 7 is a flow chart for a method of operating a drilling rig which controls a drillstring in a borehole.

**Claims**

**1.** A method of determining movement dynamics of a drillstring in an angled or deviated borehole, comprising the steps of:

(a) calculating or measuring a friction coefficient for a sliding contact between the drillstring and a sidewall of the angled or deviated borehole, wherein a frictional force is present between the drillstring and the angled or deviated borehole, wherein the total frictional force comprises a component approximately proportional to a normal side force between the drillstring and the angled or deviated borehole, and wherein the friction coefficient is a varying function of non-zero sliding velocities; and
(b) predicting movement dynamics of the drillstring using a model of drillstring behaviour that includes the calculated or measured friction coefficient as a parameter.

2. A method according to claim 1, further comprising providing the predicted movement dynamics to an operator of the drillstring.

3. A method according to claim 1, wherein the operator is a processor.

4. A method according to claim 1, wherein the friction coefficient is calculated in step (a), the calculation being performed by fitting a model of drillstring behaviour to in-service measurements obtained from the drillstring while the drillstring is operating in the angled borehole, the model having said friction coefficient as a directly or indirectly adjustable variable.

5. A method according to claim 4, further comprising an initial step of operating the drillstring to obtain the in-service measurements.

6. A method according to claim 1, wherein the friction coefficient is measured in step (a), the measurement being obtained from a test rig (1, 2, 3, 4, 5, 6, 7) which simulates sliding contact between the drillstring and the sidewall of the angled borehole.

7. A method according to any one of the previous claims including performing step (b) repeatedly for different drillstring operating conditions.

8. A method according to claim 7, wherein the different operating conditions are obtained by varying one or more modelling parameters selected from the group consisting of drillstring advance rate, drillstring length, drillstring trajectory, drillstring rotational velocity, mean cross-sectional area of the metal in the drillstring pipe, and mean radius squared of the metal in the drillstring pipe.

9. A method of operating a drilling rig that controls a drillstring in a borehole, the method comprising: performing the method of claim 7 or 8 to identify an operating condition for the drillstring predicted to provide stable movement dynamics; and drilling the angled borehole with the drillstring under the identified operating condition.

10. A method according to claim 1, comprising operating a drilling rig which controls a drillstring in a deviated borehole, the method comprising the steps of:

(a) predicting movement dynamics of the drillstring for different drillstring operating conditions, the predictions using the model of drillstring behaviour which includes the calculated or measured friction coefficient for the sliding contact between the drillstring and the sidewall of the borehole;
(b) selecting an operating condition predicted to provide stable movement dynamics; and
(c) drilling the deviated borehole with the drillstring under the selected operating condition.

11. A method according to claim 10, wherein: in step (a) the different operating conditions are obtained by varying one or more modelling parameters selected from the group consisting of drillstring advance rate, drillstring length, drillstring trajectory, drillstring rotational velocity, mean cross-sectional area of the metal in the drillstring pipe, mean radius squared of the metal in the drillstring pipe and the velocity dependency of the friction coefficient.

12. A method according to claim 11, wherein different velocity dependencies of the friction coefficient correspond to different drilling fluids.

13. A method according to claim 12, wherein the method further includes the initial step of measuring said velocity dependencies for different drilling fluids, in step (a) the different operating conditions are obtained by varying at least the velocity dependency of the friction coefficient according to the velocity dependencies measured for the drilling fluids, and in step (c) the deviated borehole is drilled with the drilling fluid corresponding to the selected operating condition.

14. A method according to any one of claims 1 to 9, wherein the movement dynamics include the drillstring rotational velocity.

15. A method according to any one of claims 1 to 9, wherein the friction coefficient is a smoothly varying function of non-zero sliding velocities.

16. A method according to any one claims 1 to 9, wherein the friction coefficient decreases with increasing sliding velocity for at least a range of non-zero sliding velocities.

**Patentansprüche**

1. Verfahren zum Bestimmen der Bewegungsdynamik eines Bohrstrangs in einem abgewinkelten oder abgelenkten Bohrloch, mit den Schritten:

(a) Berechnen oder Messen eines Reibungskoeffizienten für einen Gleitkontakt zwischen dem Bohrstrang und einer Seitenwand des abgewinkelten oder abgelenkten Bohrlochs, wobei eine Reibungskraft zwischen dem Bohrstrang und dem abgewinkelten oder abgelenkten Bohrloch vorhanden ist, wobei die Gesamtreibungskraft eine zu einer Normalseitenkraft zwischen dem Bohrstrang und dem abgewinkelten oder abgelenkten Bohrloch ungefähr proportionale Komponente umfasst, und wobei der Reibungskoeffizient eine variierende Funktion von von null verschiedenen Gleitgeschwindigkeiten ist; und
(b) Vorhersagen der Bewegungsdynamik des Bohrstrangs unter Verwendung eines Modells des Bohrstrangverhaltens, das den berechneten oder gemessenen Reibungskoeffizienten als Parameter umfasst.

2. Verfahren gemäß Anspruch 1, das ferner ein Bereitstellen der vorhergesagten Bewegungsdynamik an einen Bediener des Bohrstrangs umfasst.

3. Verfahren gemäß Anspruch 1, wobei der Bediener ein Prozessor ist.

4. Verfahren gemäß Anspruch 1, wobei in Schritt (a) der Reibungskoeffizient berechnet wird, wobei die Berechnung durch Anpassen eines Modells des Bohrstrangverhaltens an Messungen im Betriebszustand, die aus dem Bohrstrang erhalten werden, während der Bohrstrang im abgewinkelten Bohrloch im Einsatz ist, durchgeführt wird, wobei das Modell den Reibungskoeffizienten als direkt oder indirekt einstellbare Variable aufweist.

5. Verfahren gemäß Anspruch 4, das ferner einen anfänglichen Schritt eines Betreibens des Bohrstrangs zum Erhalten der Messungen im Betriebszustand umfasst.

6. Verfahren gemäß Anspruch 1, wobei in Schritt (a) der Reibungskoeffizient gemessen wird, wobei die Messung aus einer Testbohranlage (1, 2, 3, 4, 5, 6, 7) erhalten wird, die einen Gleitkontakt zwischen dem Bohrstrang und der Seitenwand des abgewinkelten Bohrlochs simuliert.

7. Verfahren gemäß einem der vorhergehenden Ansprüche, das ein wiederholtes Durchführen von Schritt (b) für unterschiedliche Bohrstrangeinsatzbedingungen umfasst.

8. Verfahren gemäß Anspruch 7, wobei die unterschiedlichen Einsatzbedingungen erhalten werden durch Variieren eines oder mehrerer Modellparameter ausgewählt aus der Gruppe bestehend aus Bohrstrangvortriebsrate, Bohrstranglänge, Bohrstrangtrajektorie, Bohrstrangdrehgeschwindigkeit, mittlerer Querschnittsfläche des Metalls im Bohrstranggestänge und quadratisch gemitteltem Radius des Metalls im Bohrstranggestänge.

9. Verfahren zum Betreiben einer Bohranlage, die einen Bohrstrang in einem Bohrloch steuert, wobei das Verfahren umfasst: Durchführen des Verfahrens nach Anspruch 7 oder 8, um eine Einsatzbedingung für den Bohrstrang zu identifizieren, bei der vorhergesagt wird, dass sie eine stabile Bewegungsdynamik bereitstellt; und Bohren des abgewinkelten Bohrlochs mit dem Bohrstrang unter der identifizierten Einsatzbedingung.

**10.** Verfahren gemäß Anspruch 1, das ein Betreiben einer Bohranlage, die einen Bohrstrang in einem abgelenkten Bohrloch steuert, umfasst, wobei das Verfahren die Schritte umfasst:

(a) Vorhersagen der Bewegungsdynamik des Bohrstrangs für unterschiedliche Bohrstrangeinsatzbedingungen, wobei die Vorhersagen das Modell des Bohrstrangverhaltens verwenden, das den berechneten oder gemessenen Reibungskoeffizienten für den Gleitkontakt zwischen dem Bohrstrang und der Seitenwand des Bohrlochs umfasst;
(b) Auswählen einer Einsatzbedingung, bei der vorhergesagt wird, dass sie eine stabile Bewegungsdynamik bereitstellt; und
(c) Bohren des abgelenkten Bohrlochs mit dem Bohrstrang unter der ausgewählten Einsatzbedingung.

**11.** Verfahren gemäß Anspruch 10, wobei: in Schritt (a) die unterschiedlichen Betriebsbedingungen erhalten werden durch Variieren eines oder mehrerer Modellparameter ausgewählt aus der Gruppe bestehend aus Bohrstrangvortriebsrate, Bohrstranglänge, Bohrstrangtrajektorie, Bohrstrangdrehgeschwindigkeit, mittlerer Querschnittsfläche des Metalls im Bohrstranggestänge, quadratisch gemitteltem Radius des Metalls im Bohrstranggestänge und der Geschwindigkeitsabhängigkeit vom Reibungskoeffizienten.

**12.** Verfahren gemäß Anspruch 11, wobei unterschiedliche Geschwindigkeitsabhängigkeiten des Reibungskoeffizienten unterschiedlichen Bohrspülungen entsprechen.

**13.** Verfahren gemäß Anspruch 12, wobei das Verfahren ferner den anfänglichen Schritt des Messens der Geschwindigkeitsabhängigkeiten für unterschiedliche Bohrspülungen umfasst, in Schritt (a) die unterschiedlichen Einsatzbedingungen erhalten werden durch Variieren von zumindest der Geschwindigkeitsabhängigkeit des Reibungskoeffizienten gemäß den für die Bohrspülungen gemessenen Geschwindigkeitsabhängigkeiten, und in Schritt (c) das abgelenkte Bohrloch mit dem der ausgewählten Einsatzbedingung entsprechenden Bohrspülung gebohrt wird.

**14.** Verfahren gemäß einem der Ansprüche 1 bis 9, wobei die Bewegungsdynamik die Bohrstrangdrehgeschwindigkeit umfasst.

**15.** Verfahren gemäß einem der Ansprüche 1 bis 9, wobei der Reibungskoeffizient eine gleichförmig variierende Funktion von von null verschiedenen Gleitgeschwindigkeiten ist.

**16.** Verfahren gemäß einem der Ansprüche 1 bis 9, wobei der Reibungskoeffizient mit zunehmender Gleitgeschwindigkeit zumindest für einen Bereich von von null verschiedenen Gleitgeschwindigkeiten abnimmt.

**Revendications**

**1.** Procédé de détermination de la dynamique de mouvement d'un train de tiges de forage dans un trou de forage incliné ou dévié, comprenant les étapes consistant à :

(a) calculer ou mesurer un coefficient de frottement pour un contact glissant entre le train de tiges de forage et une paroi latérale du trou de forage incliné ou dévié, dans lequel une force de frottement est présente entre le train de tiges de forage et le trou de forage incliné ou dévié, la force de frottement totale comprenant un composant approximativement proportionnel à une force latérale normale entre le train de tiges de forage et le trou de forage incliné ou dévié, et le coefficient de frottement étant une fonction variable de vitesses de glissement non nulles ; et
(b) prédire la dynamique de mouvement du train de tiges de forage à l'aide d'un modèle de comportement de train de tiges de forage qui comprend le coefficient de frottement calculé ou mesuré en tant que paramètre.

**2.** Procédé selon la revendication 1, comprenant en outre la fourniture de la dynamique de mouvement prédite à un opérateur du train de tiges de forage.

**3.** Procédé selon la revendication 1, dans lequel l'opérateur est un processeur.

**4.** Procédé selon la revendication 1, dans lequel le coefficient de frottement est calculé à l'étape (a), le calcul étant effectué par adaptation d'un modèle de comportement de train de tiges de forage à des mesures en service obtenues à partir du train de tiges de forage pendant que le train de tiges de forage est en service dans le trou de forage incliné, le modèle ayant ledit coefficient de frottement comme variable directement ou indirectement ajustable.

5. Procédé selon la revendication 4, comprenant en outre une étape initiale de fonctionnement du train de tiges de forage pour obtenir les mesures en service.

6. Procédé selon la revendication 1, dans lequel le coefficient de frottement est mesuré à l'étape (a), la mesure étant obtenue à partir d'un banc d'essai (1, 2 3 4, 5, 6, 7) qui simule un contact glissant entre le train de tiges de forage et la paroi latérale du trou de forage incliné.

7. Procédé selon l'une quelconque des revendications précédentes comprenant la réalisation de l'étape (b) de façon répétée pour différentes conditions de fonctionnement de train de tiges de forage.

8. Procédé selon la revendication 7, dans lequel les différentes conditions de fonctionnement sont obtenues en faisant varier un ou plusieurs paramètres de modélisation sélectionnés dans le groupe constitué par le taux d'avancement de train de tiges de forage, la longueur de train de tiges de forage, la trajectoire de train de tiges de forage, la vitesse de rotation de train de tiges de forage, la surface de section transversale moyenne du métal dans le tube de train de tiges de forage, et un rayon moyen au carré du métal dans le tube de train de tiges de forage.

9. Procédé de fonctionnement d'un appareil de forage qui commande un train de tiges de forage dans un trou de forage, le procédé comprenant : la réalisation du procédé selon la revendication 7 ou 8 pour identifier une condition de fonctionnement pour le train de tiges de forage prédite pouvoir fournir une dynamique de mouvement stable ; et le forage du trou de forage incliné avec le train de tiges de forage dans la condition de fonctionnement identifiée.

10. Procédé selon la revendication 1, consistant à faire fonctionner un appareil de forage qui commande un train de tiges de forage dans un trou de forage dévié, le procédé comprenant les étapes consistant à :

(a) prédire la dynamique de mouvement du train de tiges de forage pour différentes conditions de fonctionnement de train de tiges de forage, les prédictions utilisant le modèle de comportement de train de tiges de forage qui comprend le coefficient de frottement calculé ou mesuré pour le contact glissant entre le train de tiges de forage et la paroi latérale du trou de forage ;
(b) sélectionner une condition de fonctionnement prédite pour fournir une dynamique de mouvement stable ; et
(c) forer le trou de forage dévié avec le train de tiges de forage dans la condition de fonctionnement sélectionnée.

11. Procédé selon la revendication 10, dans lequel : à l'étape (a) les différentes conditions de fonctionnement sont obtenues en faisant varier un ou plusieurs paramètres de modélisation sélectionnées dans le groupe constitué par le taux d'avancement de train de tiges de forage, la longueur de train de tiges de forage, la trajectoire de train de tiges de forage, la vitesse de rotation de train de tiges de forage, la surface de section transversale moyenne du métal dans le tuyau de train de tiges de forage, le rayon moyen au carré du métal dans le tube de train de tiges de forage et la dépendance de la vitesse du coefficient de frottement.

12. Procédé selon la revendication 11, dans lequel différentes dépendances de la vitesse du coefficient de frottement correspondent à différents fluides de forage.

13. Procédé selon la revendication 12, dans lequel le procédé comprend en outre l'étape initiale consistant à mesurer lesdites dépendances de la vitesse pour différents fluides de forage, à l'étape (a) les différentes conditions de fonctionnement sont obtenues en faisant varier au moins la dépendance de la vitesse du coefficient de frottement en fonction des dépendances de la vitesse mesurées pour les fluides de forage, et à l'étape (c) le trou de forage dévié est foré avec le fluide de forage correspondant à la condition de fonctionnement sélectionnée.

14. Procédé selon l'une quelconque des revendications 1 à 9, dans lequel la dynamique de mouvement comprend la vitesse de rotation de train de tiges de forage.

15. Procédé selon l'une quelconque des revendications 1 à 9, dans lequel le coefficient de frottement est une fonction variant progressivement des vitesses de glissement non nulles.

16. Procédé selon l'une quelconque des revendications 1 à 9, dans lequel le coefficient de frottement diminue avec une vitesse de glissement croissante pour au moins une plage de vitesses de glissement non nulles.

Figure 1

Figure 2

(a)

stickzero00090

(b)

stickzero00190

Figure 3

(c)

stickzero00290

(d)

stickzero00390

Figure 3

(e)

stickzero00490

(f)

stickzero00590

Figure 3

(a)

stickone00090

(b)

stickone00190

Figure 4

(c)

stickone00290

(d)

stickone00390

Figure 4

Figure 4

Figure 5

Calculate or measure a friction coefficient for the sliding contact between a drillstring and a sidewall of a borehole, the friction coefficient being a varying function of non-zero sliding velocities.

Predict movement dynamics of a drillstring using a model of drillstring behaviour which includes the measured friction coefficient as a parameter.

Figure 6

Predict movement dynamics of the drillstring for different drillstring operating conditions, the predictions using a model of drillstring behaviour which includes a friction coefficient for the sliding contact between the drillstring and a sidewall of the borehole, the friction coefficient being a varying function of non-zero sliding velocities.

Selecting an operating condition predicted to provide stable movement dynamics.

Drill the borehole with the drillstring under the selected operating condition.

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QUIGLEY et al.** A Full-Scale Wellbore Friction Simulator. *IADC/SPE Drilling Conference,* 27 February 1990
- D-OSKIL: A New Mechanism for Controlling Stick-Slip Oscillations in Oil Well Drillstrings. **CANUDAS-DE-WIT C et al.** IEEE TRANSACTIONS ON CONTROL SYSTEMS TECHNOLOGY. IEEE SERVICE CENTER, 01 November 2008, vol. 16, 1177-1191

- **R. STRIBECK.** Die Wesentlichen Eigenschaften der Gleit- und Rollenlage. *Z. Verein. Deut. Ing,* 1902, vol. 46, 1341-1348
- Lubrication of water based clay suspensions. **B.J. BRISCOE et al.** Tribology Research: From Model Experiment to Industrial Problem. Elsevier Science, 2001, 331-340